# EUROPEAN PATENT APPLICATION

(11) **EP 4 697 262 A1**
(43) Date of publication of application: **18.02.2026**
(21) Application number: 24788583.3
(22) Date of filing: 28.03.2024
(51) Int. Cl.: G06T 7/215, G01C 21/28, G06T 7/00, G06T 7/73

(54) **ENVIRONMENT RECOGNITION DEVICE**

(30) Priority: 11.04.2023 JP 2023063890
(71) Applicant: AISIN CORPORATION, Kariya-shi, Aichi 448-8650 (JP)
(72) Inventor: UEDA, Koki, Kariya-shi, Aichi 448-8650 (JP)
(74) Representative: TBK
(86) International application number: PCT/JP2024/012758
(87) International publication number: WO 2024/214555

(57) **Abstract**

An environment recognition device according to an embodiment includes: a feature point detection part including a learned model that receives an input image captured by an imaging part and outputs feature points of the input image and feature amounts of the feature points; an analysis part that analyzes the feature amounts output from the feature point detection part and classifies feature points in the input image into a mobile body region including feature points of a mobile body and a non-mobile body region including feature points of a non-mobile body on the basis of an analysis result of the feature amounts; and an environment recognition part that detects a corresponding point for each feature point of the non-mobile body region, estimates a self-position on the basis of the corresponding point, and generates an environment map.

## Description

### TECHNICAL FIELD

An embodiment of the present invention relates to an environment recognition device.

### BACKGROUND ART

Conventionally, as a technique for generating an environment map by three-dimensionally estimating a current self-position from an image such as video data obtained from an imaging device, a Visual-SLAM (Simultaneous Localization and Mapping: hereinafter, referred to as "VSLAM") technique is known. In recent years, in the field of VSLAM, a feature point detector and a corresponding point detector using artificial intelligence have been developed (See, for example, Patent Literature 1).

In the VSLAM technique, self-position estimation is performed on the assumption that the surrounding environment is stationary. Therefore, in a case where there is a mobile body such as a vehicle or a person, the accuracy of self-position estimation may be adversely affected.

For example, there is a technique of classification into a mobile body and a non-mobile body for each pixel by a method using artificial intelligence such as a segmentation model, and it can be determined whether or not a feature point is detected from a mobile body by using this technique.

In addition, there has been conventionally known a technique of preparing templates of mobile bodies such as a vehicle and a human in advance, determining whether it is a mobile body such as a vehicle or a human by template matching from a captured surrounding image, and removing the mobile body to generate an environment map (See, for example, Patent Literature 2).

### CITATIONS LIST

### PATENT LITERATURE

Patent Literature 1: CN 111344716 A
Patent Literature 2: JP 2020-152234 A

### SUMMARY OF INVENTION

### TECHNICAL PROBLEMS

However, in the conventional technique of determining whether it is a mobile body by using an artificial intelligence method such as a segmentation model, it is necessary to perform determination for each pixel, and a processing load increases, and thus a large amount of hardware resources are required for the device. In addition, in the technique of Patent Literature 1, it is necessary to prepare a large number of templates of mobile bodies in advance, and the storage capacity becomes excessive. In addition, since the technique of Patent Literature 1 uses a template matching method, it is difficult to detect a mobile body without a template, and there is a possibility that the detection accuracy decreases.

An embodiment provides an environment recognition device that can perform mobile body detection at high speed and with high accuracy without requiring an excessive device configuration.

### SOLUTIONS TO PROBLEMS

An environment recognition device according to an embodiment includes: a feature point detection part including a learned model that receives an input image captured by an imaging part and outputs feature points of the input image and feature amounts of the feature points; an analysis part that analyzes the feature amounts output from the feature point detection part and classifies feature points in the input image into a mobile body region including feature points of a mobile body and a non-mobile body region including feature points of a non-mobile body on the basis of an analysis result of the feature amounts; and an environment recognition part that detects a corresponding point for each feature point of the non-mobile body region, estimates a self-position on the basis of the corresponding point, and generates an environment map.

### ADVANTAGEOUS EFFECTS OF INVENTION

According to the environment recognition device of the embodiment, as an example, it is not necessary to determine whether it is a mobile body for each pixel or use a template, and thus, mobile body detection can be performed at high speed and with high accuracy without requiring an excessive device configuration.

### BRIEF DESCRIPTION OF DRAWINGS

FIG. 1 is a perspective view illustrating an example of a state in which a portion of a vehicle interior of a vehicle according to the present embodiment is seen through.
FIG. 2 is a plan view of an example of the vehicle according to the present embodiment.
FIG. 3 is a block diagram illustrating an example of a configuration of the vehicle according to the present embodiment.
FIG. 4 is a block diagram illustrating an example of a functional configuration of an ECU included in the vehicle according to the present embodiment.
FIG. 5 is a view illustrating an example of a frame input in the present embodiment.
FIG. 6 is an enlarged view of a portion of the frame input in the present embodiment.
FIG. 7 is a schematic diagram illustrating an example of a result of classifying feature points of a frame by an analysis part according to the present embodiment.
FIG. 8 is a flowchart illustrating an example of a procedure of environment recognition processing according to the present embodiment.

### DESCRIPTION OF EMBODIMENTS

Hereinafter, an exemplary embodiment of the present invention will be disclosed. The configuration of the embodiment described below, and actions, results, and effects brought by the configuration are examples. The present invention can be realized by a configuration other than the configuration disclosed in the following embodiment, and at least one of various effects based on the basic configuration and derivative effects can be obtained.

### (Embodiment)

A vehicle according to the present embodiment may be an automobile (internal combustion engine automobile) having an internal combustion engine (engine) as a drive source, an automobile (electric automobile, fuel cell automobile, or the like) having an electric motor (motor) as a drive source, or an automobile (hybrid automobile) using both the internal combustion engine (engine) and the electric motor (motor) as drive sources. In addition, the vehicle can be equipped with various transmissions and various devices (systems, components, and the like) necessary for driving the internal combustion engine or the electric motor. In addition, the type, number, layout, and the like of the device related to driving of the wheels in the vehicle can be variously set.

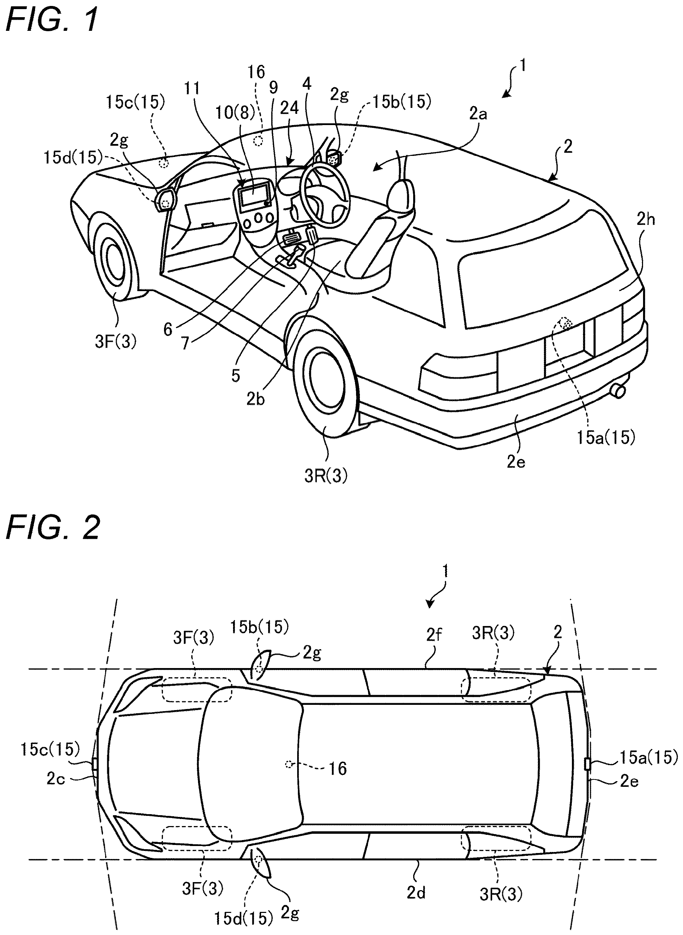

FIG. 1 is a perspective view illustrating an example of a state in which a portion of a vehicle interior of the vehicle according to the present embodiment is seen through. As illustrated in FIG. 1, a vehicle 1 includes a vehicle body 2, a steering part 4, an acceleration operation part 5, a braking operation part 6, a shift operation part 7, and a monitor device 11. The vehicle body 2 has a vehicle interior 2a in which an occupant rides. In the vehicle interior 2a, the steering part 4, the acceleration operation part 5, the braking operation part 6, the shift operation part 7, and the like are provided in a state where a driver as the occupant faces a seat 2b. The steering part 4 is, for example, a steering wheel protruding from a dashboard 24. The acceleration operation part 5 is, for example, an accelerator pedal positioned at the feet of the driver. The braking operation part 6 is, for example, a brake pedal positioned at the feet of the driver. The shift operation part 7 is, for example, a shift lever protruding from a center console.

The monitor device 11 is provided, for example, at the center of the dashboard 24 in the vehicle width direction (that is, in the right-left direction). The monitor device 11 may have a function of, for example, a navigation system, an audio system, or the like. The monitor device 11 includes a display device 8, an audio output device 9, and an operation input part 10. In addition, the monitor device 11 may include various operation input parts such as a switch, a dial, a joystick, and a push button.

The display device 8 includes an LCD (Liquid Crystal Display), an OELD (Organic Electroluminescent Display), or the like, and can display various images on the basis of image data. The audio output device 9 includes a speaker or the like, and outputs various types of audio on the basis of audio data. The audio output device 9 may be provided at a different position other than the monitor device 11 in the vehicle interior 2a.

The operation input part 10 includes a touch panel or the like, and enables the occupant to input various types of information. In addition, the operation input part 10 is provided on a display screen of the display device 8, and can transmit an image displayed on the display device 8. As a result, the operation input part 10 enables the occupant to visually recognize the image displayed on the display screen of the display device 8. The operation input part 10 detects a touch operation of the occupant on the display screen of the display device 8 to receive an input of various types of information by the occupant.

FIG. 2 is a plan view of an example of the vehicle according to the present embodiment. As illustrated in FIGS. 1 and 2, the vehicle 1 is a four-wheeled automobile or the like, and includes two right and left front wheels 3F and two right and left rear wheels 3R. All or some of the four wheels 3 can be steered.

The vehicle 1 includes a plurality of imaging parts 15 (in-vehicle cameras). In the present embodiment, the vehicle 1 includes, for example, four imaging parts 15a to 15d. The imaging part 15 is, for example, a digital camera including an imaging element such as a CCD (Charge Coupled Device) or a CIS (CMOS Image Sensor). The imaging part 15 can image the surroundings of the vehicle 1 at a predetermined frame rate. Then, the imaging part 15 outputs a captured image obtained by imaging the surroundings of the vehicle 1. Each of the imaging parts 15 includes a wide-angle lens or a fisheye lens, and can image a range of, for example, from 140° to 220° in the horizontal direction. In addition, the optical axis of the imaging part 15 may be set obliquely downward.

Specifically, for example, the imaging part 15a is located at an end 2e on the rear side of the vehicle body 2, and is provided on a wall portion under a rear window of a door 2h of a rear hatch. Then, the imaging part 15a can image a region behind the vehicle 1 in the periphery of the vehicle 1. The imaging part 15b is located at a right end 2f of the vehicle body 2, for example, and is provided on a right door mirror 2g. Then, the imaging part 15b can image a region on a side of the vehicle 1 in the periphery of the vehicle 1. The imaging part 15c is located, for example, on the front side of the vehicle body 2, that is, on a front end 2c in the front-rear direction of the vehicle 1, and is provided on a front bumper, a front grille, or the like. Then, the imaging part 15c can image a region in front of the vehicle 1 in the periphery of the vehicle 1. The imaging part 15d is located, for example, on the left side of the vehicle body 2, that is, at a left end 2d in the vehicle width direction and is provided on a left door mirror 2g. Then, the imaging part 15d can image a region on a side of the vehicle 1 in the periphery of the vehicle 1.

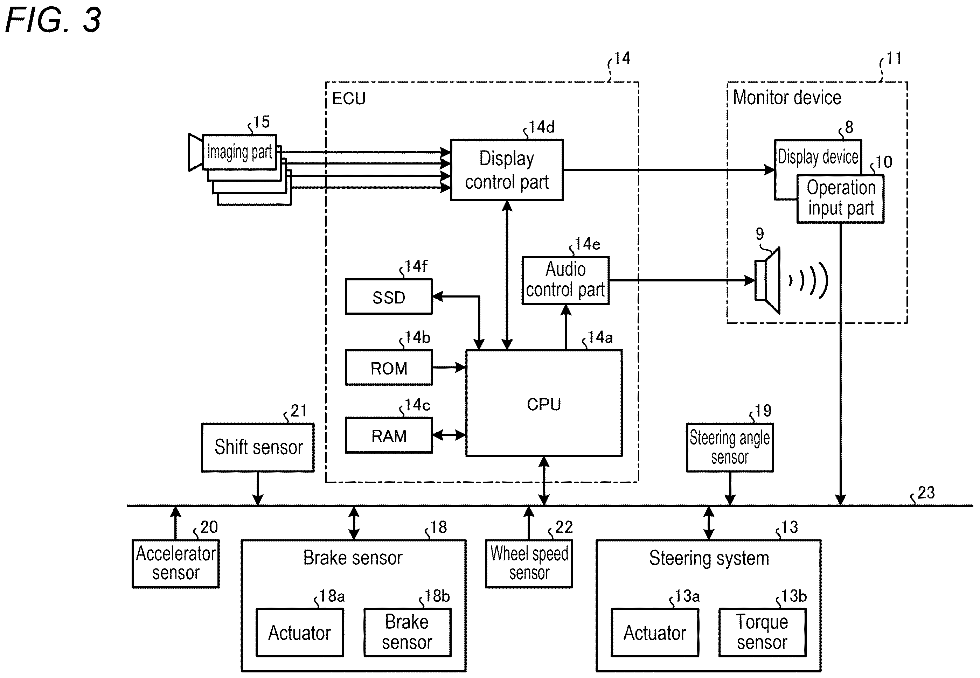

FIG. 3 is a block diagram illustrating an example of a configuration of the vehicle according to the present embodiment. Next, an example of the configuration of the vehicle 1 according to the present embodiment will be described with reference to FIG. 3.

As illustrated in FIG. 3, the vehicle 1 includes a steering system 13, a brake system 18, a steering angle sensor 19, an accelerator sensor 20, a shift sensor 21, a wheel speed sensor 22, an in-vehicle network 23, and an ECU (Electronic Control Unit) 14.

The monitor device 11, the steering system 13, the brake system 18, the steering angle sensor 19, the accelerator sensor 20, the shift sensor 21, the wheel speed sensor 22, and the ECU 14 are electrically connected via the in-vehicle network 23, which is a telecommunications line. The in-vehicle network 23 includes a CAN (Controller Area Network) or the like.

The steering system 13 is an electric power steering system, an SBW (Steer By Wire) system, or the like. The steering system 13 includes an actuator 13a and a torque sensor 13b. The steering system 13 is electrically controlled by the ECU 14 or the like, operates the actuator 13a, and applies torque to the steering part 4 to supplement the steering force, and thus steers the wheels 3. The torque sensor 13b detects the torque given to the steering part 4 by the driver and transmits the detection result to the ECU 14.

The brake system 18 includes an ABS (Anti-lock Brake System) that controls locking of brakes of the vehicle 1, an ESC (Electronic Stability Control) that suppresses a skid of the vehicle 1 during cornering, and an electric braking system that enhances the braking force to assist braking, and BBW (Brake By Wire).

The brake system 18 includes an actuator 18a and a brake sensor 18b. The brake system 18 is electrically controlled by the ECU 14 and the like, and applies braking force to the wheels 3 via the actuator 18a. The brake system 18 detects signs of locking of the brakes, idling of the wheels 3, and a skid from a difference in rotation between the right and left wheels 3 or the like, and performs control for suppressing the locking of the brakes, the idling of the wheels 3, and the skid. The brake sensor 18b is a displacement sensor that detects the position of the brake pedal as a movable portion of the braking operation part 6, and transmits the detection result of the position of the brake pedal to the ECU 14.

The steering angle sensor 19 is a sensor that detects the steering amount of the steering part 4 such as the steering wheel. In the present embodiment, the steering angle sensor 19 includes a Hall element or the like, detects the rotation angle of the rotating portion of the steering part 4 as a steering amount, and transmits the detection result to the ECU 14.

The accelerator sensor 20 is a displacement sensor that detects the position of the accelerator pedal as a movable portion of the acceleration operation part 5, and transmits the detection result to the ECU 14.

The shift sensor 21 is a sensor that detects the position of a movable portion (bar, arm, button, or the like) of the shift operation part 7, and transmits the detection result to the ECU 14.

The wheel speed sensor 22 includes a Hall element or the like, and is a sensor that detects the amount of rotation of the wheel 3 and the number of rotations of the wheel 3 per unit time, and transmits the detection result to the ECU 14.

The ECU 14 includes a computer or the like, and controls the overall control of the vehicle 1 by cooperation of hardware and software. Specifically, the ECU 14 includes a CPU (Central Processing Unit) 14a, a ROM (Read Only Memory) 14b, a RAM (Random Access Memory) 14c, a display control part 14d, an audio control part 14e, and an SSD (Solid State Drive) 14f. The CPU 14a, the ROM 14b, and the RAM 14c may be provided in the same circuit board.

The CPU 14a reads a program stored in a non-volatile storage device such as the ROM 14b, and executes various types of arithmetic processing according to the program. For example, the CPU 14a executes image processing on image data to be displayed on the display device 8, control of automatic driving and traveling of the vehicle 1 according to a target route to a target position such as a parking position, processing related to calibration of the imaging part 15, and the like.

The ROM 14b stores various programs and parameters and the like required for executing the programs.

The RAM 14c temporarily stores various data used in arithmetic operation in the CPU 14a.

Among the arithmetic processing in the ECU 14, the display control part 14d mainly executes image processing on image data acquired from the imaging part 15 and output to the CPU 14a, conversion of the image data acquired from the CPU 14a into image data for display to be displayed on the display device 8, and the like.

Among the arithmetic processing in the ECU 14, the audio control part 14e mainly executes processing on audio acquired from the CPU 14a and output to the audio output device 9.

The SSD 14f is a rewritable non-volatile storage part and continues to store data acquired from the CPU 14a even in a case where power of the ECU 14 is turned off.

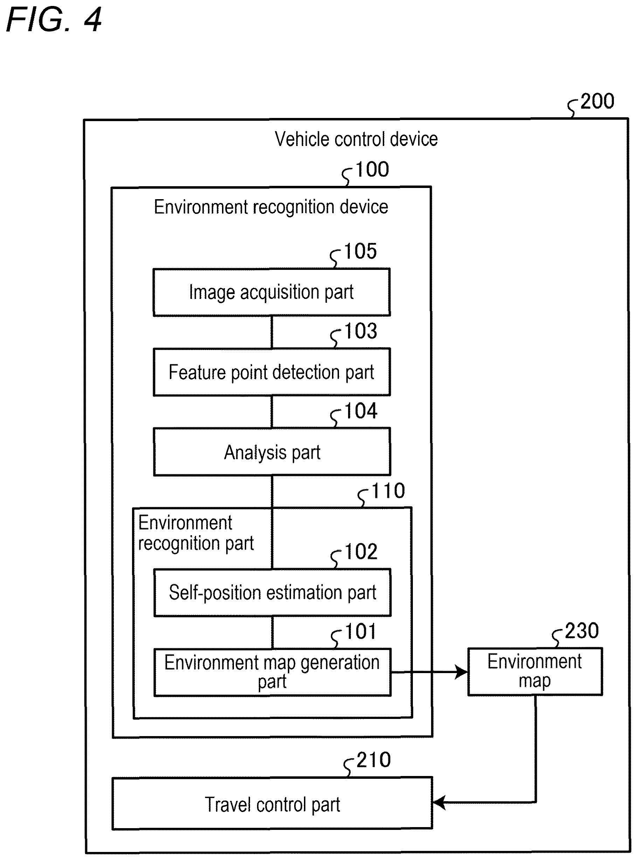

Next, an example of the functional configuration of the ECU 14 included in the vehicle 1 according to the present embodiment will be described with reference to FIG. 4. The ECU 14 operates as a vehicle control device 200. Hereinafter, the function of the ECU 14 will be described as the vehicle control device 200.

FIG. 4 is a block diagram illustrating an example of the functional configuration of the ECU included in the vehicle according to the present embodiment.

As illustrated in FIG. 4, the vehicle control device 200 mainly includes an environment recognition device 100, a travel control part 210, and an environment map 230. The environment recognition device 100 mainly includes an image acquisition part 105, a feature point detection part 103, an analysis part 104, and an environment recognition part 110. The environment recognition part 110 includes a self-position estimation part 102 and an environment map generation part 101.

For example, a processor such as the CPU 14a mounted on a circuit board executes an environment recognition program and a vehicle control program stored in a storage medium such as the ROM 14b or the SSD 14f, whereby the ECU 14 implements the functions of the image acquisition part 105, the feature point detection part 103, the analysis part 104, the self-position estimation part 102, the environment map generation part 101, and the travel control part 210. Some or all of the image acquisition part 105, the feature point detection part 103, the analysis part 104, the self-position estimation part 102, the environment map generation part 101, and the travel control part 210 may be configured by hardware such as a circuit.

The image acquisition part 105 acquires an image (frame) obtained by imaging the surroundings of the vehicle 1 by the imaging part 15. Hereinafter, the image is also referred to as a frame. In the present embodiment, the image acquisition part 105 acquires a frame from the imaging part 15 when the vehicle 1 moves.

The feature point detection part 103 is a feature point detector including a learned model. The learned model receives input frame acquired by the image acquisition part 105 and outputs a plurality of feature points present in the frame and feature amounts. The feature amount is a descriptor for expressing a feature point, and is expressed by a high-dimensional vector.

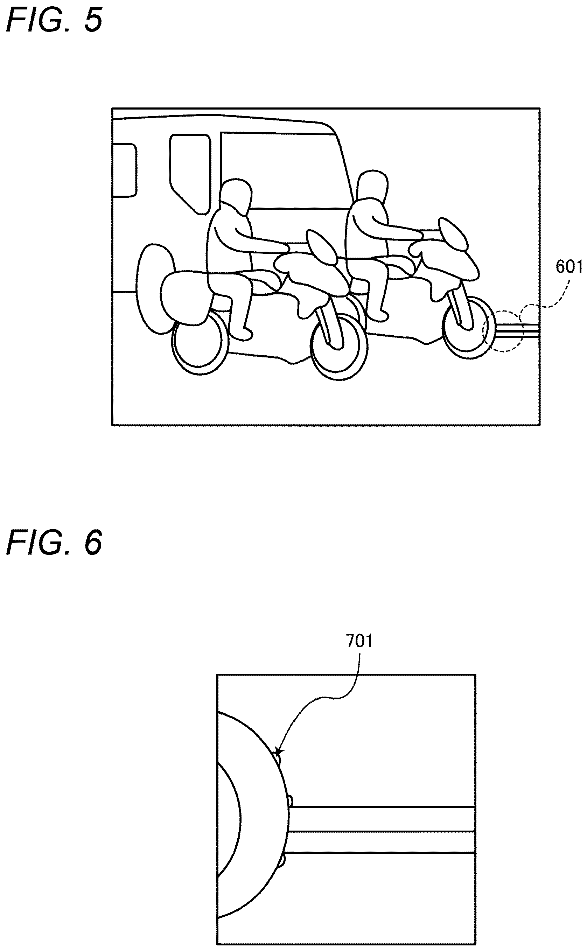

FIG. 5 is a view illustrating an example of the frame input in the present embodiment. In the frame illustrated in FIG. 5, two motorcycles on each of which a person rides and one automobile appear as moving objects.

FIG. 6 is an enlarged view of a portion (portion denoted by reference sign 601 in FIG. 5) of the frame input in the present embodiment. In the example illustrated in FIG. 6, a portion of the wheel of the motorcycle is enlarged. Reference sign 701 indicates an example of the feature amount of the feature point.

Returning to FIG. 4, the learned model constituting the feature point detection part 103 only needs to use artificial intelligence such as a deep learning method, and for example, a feature point detector disclosed in Patent Literature 1 (CN 111344716 A) can be used.

The analysis part 104 analyzes the feature amounts output from the feature point detection part 103, and classifies the feature points in the frame into a mobile body region and a non-mobile body region on the basis of the analysis result of the feature amounts. Here, the mobile body region is a region including feature points of a mobile body in the frame. The non-mobile body region is a region including feature points of a mobile body in the frame.

The mobile body region includes a moving object region and a cloud region. The moving object region is a region including feature points of a moving object such as a car or a person in the frame. The cloud region is a region of feature points including a cloud in the frame. Since a cloud also moves, a cloud is included in the mobile body region similarly to the moving object.

That is, the analysis part 104 classifies the feature points in the frame into the cloud region, the moving object region, and the non-mobile body region on the basis of the analysis result of the feature amounts.

As a method of analysis and classification, for example, there are the following two methods.

A first method is as follows.

First, the feature amount of a moving object and the feature amount of a cloud are determined in advance for the type of the mobile body and the cloud. This feature amount is referred to as a reference feature amount. Then, the analysis part 104 compares the feature amount output from the feature point detection part 103 with the reference feature amount of the moving object or the cloud, and obtains the distance between the feature amount and the reference feature amount of the moving object or the cloud. Then, the analysis part 104 determines whether or not the obtained distance is equal to or less than a first threshold. Then, the analysis part 104 classifies the feature point having the feature amount into the mobile body region or the cloud region in a case where the distance is equal to or less than the first threshold, and classifies the feature point having the feature amount into the non-mobile body region in a case where the distance is larger than the first threshold.

A second method is as follows.

The analysis part 104 classifies the feature points in a frame into the moving object region, the cloud region, and the non-mobile body region by using the second learned model that receives input feature amounts of feature points and classifies the feature points having the feature amounts into the feature points of the moving object, the feature points of the cloud, and the feature points of the non-mobile body.

Here, the information amount of the feature amount output by the feature point detector including the learned model using artificial intelligence such as the feature point detection part 103 of the present embodiment is larger than the information amount of the feature amount output by the feature point detector not using artificial intelligence. Therefore, the analysis processing by the analysis part 104 of the present embodiment can be executed on the feature amount output by the feature point detector including the learned model using artificial intelligence, that is, the feature point detection part 103 of the present embodiment. However, since the information amount of the feature amount output from the feature point detector not using artificial intelligence is small, the analysis processing by the analysis part 104 of the present embodiment cannot be performed.

Note that the methods of analysis and classification are not limited to the first method and the second method described above, and any method can be adopted.

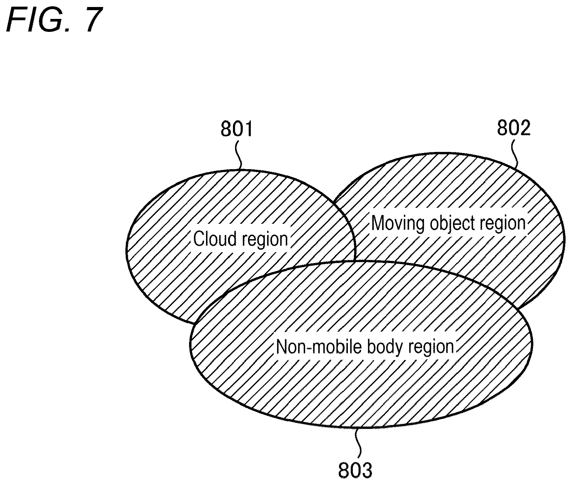

FIG. 7 is a schematic diagram illustrating an example of the result of classifying feature points of a frame by the analysis part according to the present embodiment. As illustrated in FIG. 7, it can be seen that a frame is classified into a moving object region 802, a cloud region 801, and a non-mobile body region 803.

The environment recognition part 110 performs self-position estimation by the VSLAM method by using the feature points of the non-mobile body region 803, which are the analysis result of the analysis part 104, and generates the environment map 230.

The self-position estimation part 102 of the environment recognition part 110 detects the corresponding point for each feature point of the non-mobile body region by using, for example, the VSLAM method, and estimates the self-position on the basis of the corresponding points.

The environment map generation part 101 of the environment recognition part 110 generates the environment map 230 on the basis of the estimated self-position, the feature points, and the corresponding points by using, for example, the VSLAM method. The environment map 230 is data indicating map points of three-dimensional coordinates defined for a target. The environment map 230 is generated and stored in a storage device such as the SSD 14f.

The travel control part 210 performs travel control of the vehicle 1. Specifically, the travel control part 210 executes processing of automatic driving and automatic parking assistance while referring to the environment map 230.

Next, environment recognition processing by the environment recognition device 100 according to the present embodiment configured as described above will be described.

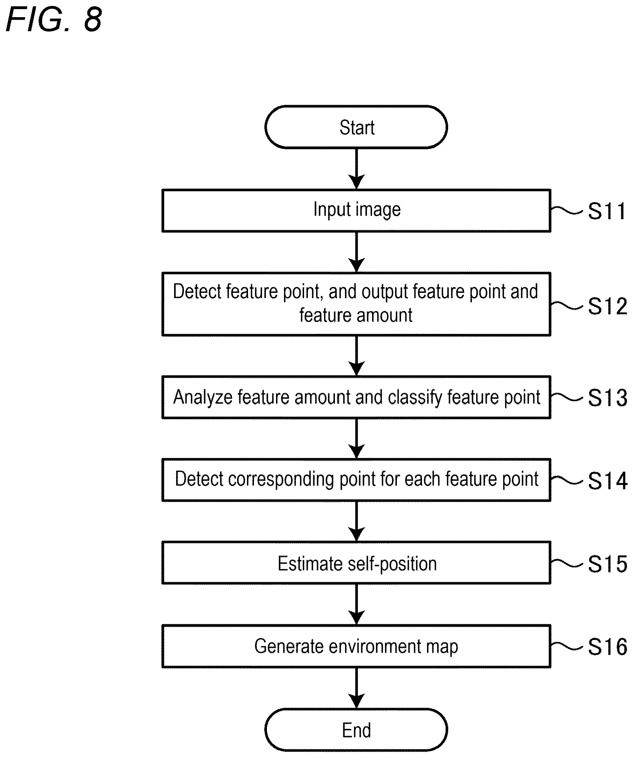

FIG. 8 is a flowchart illustrating an example of the procedure of environment recognition processing according to the present embodiment.

The image acquisition part 105 acquires an image captured by the imaging part 15 while the vehicle 1 is moving (S11). Specifically, the image acquisition part 105 sequentially acquires frames constituting the moving image captured by the imaging part 15. Then, the following processing is executed for each frame.

Next, the feature point detection part 103 receives an input frame acquired by the image acquisition part 105, performs feature point detection, and outputs feature points and feature amounts from the frame as a detection result (S12).

Next, the analysis part 104 analyzes the feature amounts output from the feature point detection part 103, and classifies the plurality of feature points into the moving object region 802, the cloud region 801, and the non-mobile body region 803 on the basis of the analysis result (S13). As the method of analysis and classification, the first method or the second method described above can be used.

Next, the self-position estimation part 102 detects a corresponding point for each feature point classified into the non-mobile body region 803 in S13 for the plurality of frames (S14). Then, the self-position estimation part 102 estimates the self-position of the vehicle 1 by the VSLAM method on the basis of the corresponding point (S15). In addition, the environment map generation part 101 generates the environment map 230 (S16).

As described above, according to the present embodiment, the environment recognition device 100 includes: the feature point detection part 103 including the learned model that receives an input image captured by the imaging part 15 and outputs feature points of the input image and feature amounts of the feature points; the analysis part 104 that analyzes the feature amounts output from the feature point detection part 103 and classifies the feature points in the image into the mobile body region including feature points of a mobile body and the non-mobile body region 803 including feature points of a non-mobile body on the basis of the analysis result of the feature amounts; and the environment recognition part 110 that detects a corresponding point for each feature point of the non-mobile body region 803, estimates the self-position on the basis of the corresponding point, and generates an environment map. Therefore, according to the present embodiment, feature amounts of the image are detected using the learned model, the feature amounts are analyzed, and the feature points are classified into the mobile body region and the non-mobile body region 803 on the basis of the analysis result of the feature amounts. Therefore, it is not necessary to determine whether it is a mobile body for each pixel or use a template, and mobile body detection can be performed at high speed and with high accuracy without requiring an excessive device configuration.

Furthermore, in the present embodiment, in the environment recognition device 100, the analysis part 104 compares the feature amount with a predetermined reference feature amount of the mobile body, classifies the feature point having the feature amount into the mobile body region in a case where the distance between the feature amount and the reference feature amount is equal to or less than the first threshold, and classifies the feature point having the feature amount into the non-mobile body region 803 in a case where the distance is larger than the first threshold. Therefore, according to the present embodiment, a feature point is classified by comparing the feature amount of the feature point with the reference feature amount of the mobile body. Therefore, it is not necessary to determine whether it is a mobile body for each pixel or use a template, and mobile body detection can be performed at higher speed and with higher accuracy without requiring an excessive device configuration.

In addition, in the present embodiment, in the environment recognition device 100, the analysis part 104 classifies the feature points in the image, the feature points having the feature amounts into the mobile body region and the non-mobile body region 803 by using the second learned model that receives the feature amounts of the feature points, the feature amounts being input, and classifies the feature points having the feature amounts into the feature points of the mobile body and the feature points of the non-mobile body. Therefore, according to the present embodiment, the second learned model that classifies feature points having feature amounts into the feature points of the mobile body and the feature points of the non-mobile body is used. Therefore, it is not necessary to determine whether it is a mobile body for each pixel or use a template, and mobile body detection can be performed at a higher speed and with higher accuracy without requiring an excessive device configuration.

In addition, in the present embodiment, in the environment recognition device 100, the analysis part 104 classifies feature points in an image into the cloud region 801 including feature points of a cloud, which is a mobile body, the moving object region 802 including feature points of a moving object, which is a mobile body, and the non-mobile body region 803 on the basis of the analysis result of the feature amounts. Therefore, according to the present embodiment, since the feature points are also classified into the region of the cloud, which is one of the mobile bodies, mobile body detection can be performed at a higher speed and with higher accuracy in consideration of the movement of the cloud.

In particular, there are an infinite number of shapes and an infinite number of movement patterns of clouds, and in the conventional technique of discriminating a mobile body by using a template of the mobile body, it is difficult to prepare the infinite number of shapes and the infinite number of movement patterns in advance as the templates. For this reason, it is difficult to judge a cloud to be a mobile body, and the accuracy of mobile body detection is deteriorated. On the other hand, in the present embodiment, as described above, since a feature point can be classified into the cloud region 801 without requiring a template, mobile body detection can be performed with higher accuracy as compared with the conventional technique.

Note that the environment recognition program executed by the environment recognition device 100 of the present embodiment is provided by being incorporated in advance in a ROM or the like.

The environment recognition program executed by the environment recognition device 100 of the present embodiment may be configured to be recorded and provided on a computer-readable recording medium such as a CD-ROM, a flexible disk (FD), a CD-R, or a DVD (Digital Versatile Disk) in an installable or executable file.

Furthermore, the environment recognition program executed by the environment recognition device 100 of the present embodiment may be configured to be stored on a computer connected to a network such as the Internet and to be provided by being downloaded via the network. In addition, the environment recognition program executed by the environment recognition device 100 of the present embodiment may be configured to be provided or distributed via a network such as the Internet.

Although some embodiments of the present invention have been described, these embodiments have been presented as examples, and are not intended to limit the scope of the invention. These novel embodiments can be implemented in various other forms, and various omissions, replacements, and changes can be made without departing from the spirit of the invention. These embodiments and modifications thereof are included in the scope and the spirit of the invention, and are also included in the disclosure described in the claims and the scope equivalent thereto.

### (Summary of present embodiment)

The environment recognition device (100) of the present embodiment includes at least the following configuration.

That is, the environment recognition device (100) according to an embodiment includes:
the feature point detection part (103) including a learned model that receives an input image captured by the imaging part (15) and outputs feature points of the input image and feature amounts of the feature points;
the analysis part (104) that analyzes the feature amounts output from the feature point detection part (103) and classifies feature points in the input image into the mobile body region including feature points of a mobile body and the non-mobile body region (803) including feature points of a non-mobile body on the basis of an analysis result of the feature amounts; and
the environment recognition part ( 110) that detects a corresponding point for each feature point of the non-mobile body region (803), estimates a self-position on the basis of the corresponding point, and generates the environment map (230).

According to the configuration, as an example, it is not necessary to determine whether it is a mobile object for each pixel or use a template, and thus, mobile body detection can be performed at high speed and with high accuracy without requiring an excessive device configuration.

Furthermore, in the environment recognition device (100) of an embodiment,
the analysis part (104) compares each feature amount with a predetermined reference feature amount of the mobile body, classifies each feature point having the feature amount into the mobile body region in a case where a distance between the feature amount and the predetermined reference feature amount is equal to or less than a first threshold, and classifies the feature point having the feature amount into the non-mobile body region (803) in a case where the distance is larger than the first threshold.

According to the configuration, as an example, classification is performed by comparing the feature amount of a feature point with the reference feature amount of the mobile body. Therefore, it is not necessary to determine whether it is a mobile body for each pixel or use a template, and mobile body detection can be performed at higher speed and with higher accuracy without requiring an excessive device configuration.

In addition, in the environment recognition device (100) of an embodiment,
the analysis part (104) classifies the feature points in the input image having the feature amounts into the mobile body region and the non-mobile body region (803) by using the second learned model that receives the feature amounts of the feature points, the feature amounts being input, and classifies the feature points having the feature amounts into the feature points of the mobile body and the feature points of the non-mobile body.

According to the configuration, as an example, the second learned model that classifies feature points having feature amounts into the feature points of the mobile body and the feature points of the non-mobile body is used. Therefore, it is not necessary to determine whether it is a mobile body for each pixel or use a template, and mobile body detection can be performed at a higher speed and with higher accuracy without requiring an excessive device configuration.

In addition, in the environment recognition device (100) of an embodiment,
the analysis part (104) classifies the feature points in the input image into the cloud region (801) including feature points of a cloud, which is the mobile body, the moving object region (802) including feature points of a moving object, which is the mobile body, and the non-mobile body region (803) on the basis of the feature amounts.

According to the configuration, as an example, since the feature points are also classified into the region of the cloud, which is one of the mobile bodies, mobile body detection can be performed at a higher speed and with higher accuracy in consideration of the movement of the cloud.

### REFERENCE SIGNS LIST

15: Imaging part, 14: ECU, 100: Environment recognition device, 101: Environment map generation part, 102: Self-position estimation part, 103: Feature point detection part, 104: Analysis part, 105: Image acquisition part, 110: Environment recognition part, 200: Vehicle control device, 210: Travel control part, 230: Environment map, 801: Cloud region, 802: Moving object region, and 803: Non-mobile body region

## Claims

1. An environment recognition device comprising:
a feature point detection part including a learned model that receives an input image captured by an imaging part and outputs feature points of the input image and feature amounts of the feature points;
an analysis part that analyzes the feature amounts output from the feature point detection part and classifies feature points in the input image into a mobile body region including feature points of a mobile body and a non-mobile body region including feature points of a non-mobile body on a basis of an analysis result of the feature amounts; and
an environment recognition part that detects a corresponding point for each feature point of the non-mobile body region, estimates a self-position on a basis of the corresponding point, and generates an environment map.

2. The environment recognition device according to claim 1, wherein the analysis part compares each feature amount with a predetermined reference feature amount of the mobile body, classifies each feature point having the feature amount into the mobile body region in a case where a distance between the feature amount and the predetermined reference feature amount is equal to or less than a first threshold, and classifies the feature point having the feature amount into the non-mobile body region in a case where the distance is larger than the first threshold.

3. The environment recognition device according to claim 1, wherein the analysis part classifies the feature points in the input image, the feature points having the feature amounts, into the mobile body region and the non-mobile body region by using a second learned model that receives the feature amounts of the feature points, the feature amounts being input, and classifies the feature points having the feature amounts into the feature points of the mobile body and the feature points of the non-mobile body.

4. The environment recognition device according to any one of claims 1 to 3, wherein the analysis part classifies the feature points in the input image into a cloud region including feature points of a cloud, which is the mobile body, a moving object region including feature points of a moving object, which is the mobile body, and the non-mobile body region on a basis of the feature amounts.
